# EUROPÄISCHE PATENTSCHRIFT

(11) **EP 2 305 591 B1**
(45) Veröffentlichungstag und Bekanntmachung des Hinweises auf die Patenterteilung: **18.07.2012**
(21) Anmeldenummer: 10183786.2
(22) Anmeldetag: 08.08.2007
(51) Int. Cl.: B66B 7/06, B29D 29/10, F16G 5/06, F16G 5/14, D07B 1/22

(54) **Riemen für eine Aufzuganlage und Verfahren zur Herstellung eines solchen Riemens**
Lift belt for a lift system and method for manufacturing such a lift belt
Courroie d'élévateur pour un élévateur et procédé de fabrication d'une telle courroie d'élévateur

(30) Priorität: 11.08.2006 EP 06118816
(43) Veröffentlichungstag der Anmeldung: 06.04.2011
(62) Teilanmeldung aus: 07113972.9
(73) Patentinhaber: Inventio AG, 6052 Hergiswil NW (CH)
(72) Erfinder: Ach, Ernst, 6030, Ebikon (CH)
(74) Vertreter: Blöchle, Hans

(56) Entgegenhaltungen:
- WO-A2-03/008840
- DE-A1- 3 527 640
- DE-A1- 10 222 015
- DE-A1- 19 851 761
- DE-A1-102004 030 722
- DE-B- 1 110 397
- US-A- 2 439 043
- US-A- 3 948 113
- US-A- 5 653 656

## Beschreibung

Die vorliegende Erfindung betrifft eine Aufzugsanlage mit einem Riemen, einen Riemen für eine solche Aufzuganlage sowie ein Verfahren zur Herstellung eines solchen Riemens.

Eine Aufzugsanlage umfasst eine Aufzugskabine und in der Regel ein Gegengewicht, die in einem Aufzugsschacht oder entlang freistehender Führungseinrichtungen bewegbar sind. Zum Erzeugen der Bewegung weist die Aufzugsanlage mindestens einen Antrieb mit mindestens je einem Treibrad auf, das über einen oder mehrere Riemen die Aufzugkabine und das Gegengewicht trägt und/oder die erforderlichen Antriebskräfte auf diese überträgt. Ein Treibrad kann dabei in an sich bekannter Weise als Treibscheibe oder gleichermaßen als Rad mit kleinerem Durchmesser, insbesondere auch als eine Abtriebswelle des Antriebs selbst, ausgebildet sein.

Die Aufzugkabine und das Gegengewicht können über den- bzw. dieselben Riemen verbunden sein, die über das Treibrad bzw. die Treibräder umgelenkt werden. Alternativ können die Aufzugkabine und das Gegengewicht auch jeweils über separate Riemen mit dem bzw. den Treibrädern derart gekoppelt sein, dass sich das Gegengewicht hebt, wenn die Aufzugkabine abgesenkt wird und umgekehrt. Während Treibräder Zugkräfte auf die Antriebsriemen ausüben, um die Aufzugkabine bzw. das Gegengewicht anzuheben, werden reine Tragriemen nicht über Treibräder, sondern lediglich über Umlenkelemente, insbesondere drehbare oder feste Umlenkrollen umgelenkt und nehmen einen konstanten Teil der Gewichtskraft der Aufzugkabine und des Gegengewichts auf. Bevorzugt sind Antriebs- und Tragriemen jedoch identisch.

Ein Riemen nach der vorliegenden Erfindung kann für jede der oben beschriebenen Funktionen eingesetzt werden, also gleichermaßen als Antriebs- und/oder Tragriemen, als einer von mehreren Riemen und/oder als Riemen, der an der Aufzugkabine und/oder dem Gegengewicht befestigt ist. Dementsprechend werden Treibräder und Umlenkrollen im Folgenden allgemein als Riemenräder bezeichnet.

Solche Riemen für Aufzuganlagen umfassen üblicherweise einen Riemenkörper aus Elastomeren. Um die Zugkräfte zu übertragen, sind in dem Riemenkörper Zugträger in Form von Stahl- und/oder Kunststoff-Corden eingebettet, die bevorzugt aus ein- oder mehrfach verseilten Drähten bzw. Kunststofffasern oder Kunststoffgarnen aufgebaut sind. Sie sind vorteilhaft in der neutralen Faser des Riemenquerschnitts angeordnet, in der bei einer Umschlingung eines Riemenrads keine Zug- oder Druckspannungen auftreten.

Aus US 2 439 043 ist ein Verfahren zur Positionierung von Endlossträngen in Riemenkörpern von Antriebsriemen bekannt.

Aus DE 198 51 761 A1 ist ein Treibriemen aus Elastomer mit trapezförmigem Pasiskörper und eingeschlossenen Zugträger bekannt.

Um die Zugträger bei der Herstellung lagerichtig im Riemen anzuordnen, ist es beispielsweise aus der WO 2006/000500 A1 bekannt, die in Form von Stahl- und/oder Kunststoff-Corden vorhandenen Zugträger einem ersten Formrad zuzuführen, auf das gleichzeitig aus einem Extruder ein plastifizierbarer Kunststoff, insbesondere PU, gegeben wird. Das Formrad weist eine Umfangsfläche mit pfeilförmig angeordneten Querrippen auf. Aufgrund der Drahtspannung werden die Zugträger dabei auf die Kopfflächen der Querrippen des Formrades gedrückt. Beim Extrudieren des plastifizierbaren Kunststoffs entsteht ein erster Teilriemen, der an seiner Unterseite durch die pfeilförmigen Querrippen des Formrades gebildete Nuten aufweist in deren Bereich die Zugträger frei liegen. Dieser Teilriemen wird einem zweiten Formrad zugeführt, wobei zwischen zweitem Formrad und der Unterseite des ersten Teilriemens aus einem Extruder wiederum ein plastifizierbarer Kunststoff, insbesondere PU, gegeben wird, der die Nuten des ersten Teilriemens ausfüllt, dabei die Zugträger umschließt und einen thermisch mit der Unterseite des ersten Teilriemens fest verbundenen zweiten Teilriemen bildet. Der Riemen wird somit zweiteilig aus zwei Teilriemen gleichen Materials gebildet, wobei die Zugträger in der Kontaktebene beider Teilriemen angeordnet sind, in der die beiden Teilriemen form- und materialschlüssig miteinander verbunden sind.

Dieses Herstellungsverfahren bzw. die nach diesem Verfahren hergestellten Aufzugriemen weisen mehrere Nachteile auf.

Die Position der einzelnen Zugträger innerhalb des Riemens wird durch eine Zuführeinrichtung definiert, die die Zugträger vor deren Auflaufen auf das erste Formrad führt. Während des Extrudiervorgangs, d. h. während die Zugträger das erste Formrad umlaufen, ist die seitliche Führung der Zugträger nur durch Reibschluss der die Zugträger bildenden Corde mit dem ersten Formrad bewirkt. Hierzu ist einerseits eine erhebliche Drahtspannung der Zugträger erforderlich, um die notwendige Normalkraft zum Aufbau des Reibschlusses zu erzeugen. Dies hat zur Folge, dass die Zugträger nicht spannungsfrei in den Riemen eingeschlossen werden können. Selbst bei hoher Drahtspannung kann jedoch eine exakte seitliche Position der Zugträger innerhalb des Riemens nicht gewährleistet werden. Der Aufbau aus zwei materialgleichen Teilriemen ist zwar zur Ausbildung einer dauerhaften Verbindung vorteilhaft, bedingt jedoch, dass der Riemen sowohl auf seiner Traktionsfläche, mit der er mit einem Treibrad reib- und/oder formschlüssig zusammenwirkt, um Zugkräfte in den Riemen einzuleiten, als auch auf seiner der Traktionsfläche abgewandten Riemenrückseite, mit der er Umlenkelemente umschlingt, gleiche Reibwerte aufweist. Da die Traktionsfläche zur Erhöhung der Traktions- bzw. Treibfähigkeit des Riemens in der Regel einen hohen Reibbeiwert aufweist, erhöht sich nachteilig auch die Reibung in der Riemenrückseite bei Umlenkung des Riemens, wodurch beispielsweise die seitliche Führung des Riemens auf einer Umlenkrolle erschwert wird.

Eine Aufgabe der vorliegenden Erfindung ist es daher, ein Verfahren zur Herstellung eines gattungsgemäßen Riemens für eine Aufzuganlage anzugeben, bei dem die lagerichtige Anordnung von Zugträgern im Riemen zuverlässig realisiert wird. Eine andere Aufgabe der vorliegenden Erfindung ist es, einen gattungsgemäßen Riemen für eine Aufzuganlage zur Verfügung zu stellen, bei dem die Belastung bei einer Umlenkung vermindert ist.

Zur Lösung der Aufgabe wird gemäss den unabhängigen Ansprüchen ein Verfahren zur Herstellung eines Riemens für eine Aufzuganlage sowie ein Riemen für eine Aufzuganlage vorgeschlagen.

Ein Verfahren zur Herstellung eines Riemens für eine Aufzuganlage nach der vorliegenden Erfindung umfasst die folgenden Schritten: Herstellen eines ersten Teilriemens, der eine Anordnung von einer oder mehreren Rillen in Längsrichtung des Riemens aufweist, Anordnen von einem Zugträger in wenigstens einer Rille der Anordnung und Verbinden eines zweiten Teilriemens mit dem ersten Teilriemen derart, dass der wenigstens eine Zugträger im Inneren des Riemens aufgenommen ist.

Durch die Anordnung der Zugträger in Rillen des ersten Teilriemens kann mit einfachen Mitteln eine lagerichtige Anordnung der Zugträger während des Herstellungsvorganges sichergestellt werden. Denn die Zugträger werden durch die Rillen in Querrichtung des Riemens formschlüssig geführt, so dass ihre lagerichtige Anordnung zueinander und zum restlichen Riemen durch die Geometrie der Rillen, insbesondere deren Breiten und Abstände zueinander, vorgegeben werden kann.

Bevorzugt wird dabei in jeder Rille ein Zugträger angeordnet. Gleichermaßen können jedoch auch mehrer Zugträger in derselben Rille angeordnet werden, womit wenigstens die lagerichtige Anordnung dieser Zugträger zu weiteren Zugträgeranordnungen in anderen Rillen vorgegeben ist. Umgekehrt muss nicht in jeder Rille des ersten Teilriemens ein Zugträger angeordnet werden. So können beispielsweise ein einheitlicher erster Teilriemen mit einer unterschiedlichen Anzahl von Zugträgern bestückt und somit aus einem Halbzeug mehrere unterschiedliche Riemen mit verschiedenen Zugfestigkeiten hergestellt werden.

Neben den Rillen zur Aufnahme von Zugträgern kann der erste Teilriemen auch weitere Aussparungen und/oder Ausformungen aufweisen, die mit entsprechenden Ausformungen bzw. Aussparungen im zweiten Teilriemen formschlüssig zusammenwirken und so die Verbindung zwischen beiden Teilriemen verstärken.

Die Zugträger können ohne Vorspannung in die Rillen des ersten Teilriemens eingelegt werden. Insbesondere damit ist es möglich, spannungsarme Riemen herzustellen. Während bei dem aus der WO 2006/000500 A1 bekannten Herstellungsverfahren solche Zugträger nicht zuverlässig in der gewünschten Position auf dem Formrad und damit innerhalb des Riemens fixiert würden, bewirken die erfindungsgemäßen Rillen eine zuverlässige Festlegung der Lage der Zugträger in Riemenquerrichtung.

Bevorzugt werden die Zugträger in die Rillen des ersten Teilriemens eingebracht, bevor der zweite Teilriemen mit diesem verbunden wird und so die Zugträger vollständig im Riemen einschließt. Gleichermaßen können die Zugträger jedoch auch zunächst auf dem zweiten Teilriemen angeordnet werden. Durch Verbinden mit dem ersten Teilriemen rückt dieser die Zugträger dann aufgrund seiner Rillen, gegebenenfalls nur noch geringfügig und unter Aufgabe einer vorher angelegten Vorspannung in den Zugträgern, in ihre endgültige Lage.

Bevorzugt wird der erste Teilriemen aus einem thermoplastischen Kunststoff hergestellt. Dabei kann es sich beispielsweise um Polyamid (PA), Polypropylen (PP), Polyethylen (PE), Polycarbonat (PC) oder Polyvinylchlorid (PVC) handeln. Vorteilhaft kann es sich bei dem thermoplastischen Kunststoff auch um ein Polyblend, i.e. eine Mischung aus zwei oder mehr verschiedenen Kunststoffen handeln. Der erste Teilriemen kann auch ein Gewebe aus einem dieser thermoplastischen Kunststoffe umfassen, das bevorzugt in einem weiteren dieser thermoplastischen Kunststoffe eingebettet bzw. von diesem durchtränkt sein kann.

Dieser erste, bevorzugt eher harte, Teilriemen führt die einzelnen Zugträger zuverlässig in seinen Rillen. In einer weiteren Ausgestaltung des erfindungsgemäßen Herstellungsverfahrens kann der erste Teilriemen nach dem Zusammenfügen mit dem zweiten Teilriemen durch Erwärmung nochmals (teil)plastifiziert werden, so dass die Zugträger, die dann auch vom zweiten Teilriemen teilweise umschlossen und derart in ihrer Lageanordnung zueinander fixiert sind, sich besser in die insoweit teilweise verformbaren Rillen des ersten Teilriemens einfügen.

Die Rillen eines erfindungsgemäßen Riemens können durch thermische und/oder mechanische Verformung des ersten Teilriemens ausgebildet werden. So können sie schon bei der Urformung des ersten Teilriemens ausgebildet und/oder anschließend durch spanende Bearbeitung oder Verformung unter erneuter Erwärmung des ersten Teilriemens, also beispielsweise durch Fräsen, Warmdrücken, Rollen oder dergleichen hergestellt werden.

Die Rillen eines erfindungsgemäßen Riemens sind bevorzugt V- oder U-förmig ausgebildet. Dies zentriert vorteilhaft die einzelnen Zugträger, die in der Regel einen rotatonssymmetrischen, insbesondere einen im wesentlichen runden Querschnitt aufweisen, im unteren geschlossenen Ende der Rillen. Vorteilhaft können dabei Zugträger unterschiedlicher Durchmesser in dem gleichen ersten Teilriemen angeordnet werden, wobei die Zugträger je nach Durchmesser unterschiedlich tief in die V- oder U-förmigen Rillen eintreten. In einer anderen Variante können die Rillen auch im Wesentlichen der (Teil)außenkontur der Zugträger entsprechen. Vorteilhaft sind die Rillen so ausgebildet, dass die darin angeordneten Zugträger in oder nahe der neutralen Faser des Querschnitts des gesamten Riemens angeordnet sind, in der bei einer Umschlingung eines Riemenrades, insbesondere eines Treibrades, keine oder nur geringe Zug- oder Druckspannungen auftreten.

Vorteilhafterweise sind die Rillen eines erfindungsgemäßen Riemens so ausgebildet, dass die Zugträger nicht in ihrer ganzen Höhe innerhalb der Rillen angeordnet sind, sondern über diese in den zweiten Teilriemen hinausragen. Auf diese Weise vergrößert sich die Traktionsfläche zwischen den Zugträgern und dem zweiten Teilriemen, was besonders vorteilhaft ist, wenn dieser zum Eingriff mit einem Treibrad der Aufzuganlage vorgesehen ist, so dass die Zugkräfte von dem Treibrad über den zweiten Teilriemen auf die Zugträger übertragen werden. Insofern ist es zu bevorzugen, dass die Rillen so flach sind, dass sie eine lagerichtige Anordnung der Zugträger sicherstellen, wobei die Zugträger jedoch soweit wie möglich in den zweiten Teilriemen hineinragen.

Die Zugträger können als Einfachdraht ausgebildet sein oder aus ein- oder mehrfach verseilten Litzen oder Seilen bestehen, wobei letztere aus Stähldrähten oder Kunststofffasern hergestellt sein können. Verseilte Zugträger können zusätzlich Seelen, insbesondere aus Kunststoff, umfassen. Aufgrund der sicheren Positionierung der einzelnen Zugträger während des Herstellungsprozesses in den Rillen können dabei neben verwindungsarmen Seilen auch Seile verwendet werden, die sich aufgrund der Verseilung beispielsweise in Querrichtung des Riemens verdrillen wollen.

Bevorzugt wird der zweite Teilriemen aus einem Elastomer, beispielsweise Polyurethan, Polychloropren und/oder Ethylen-Propylen-Dien-Kautschuk, hergestellt. Damit wird vorteilhaft ein Riemen geschaffen, der auf seinen beiden Seiten unterschiedliche Materialien aufweist, die jeweils an die unterschiedlichen Erfordernisse angepasst sein können. So kann für den ersten Teilriemen ein Material gewählt werden, das eine stabile Führung der Zugträger in den Rillen sicherstellt und im Übrigen eine ausreichende Flexibilität aufweist, wenn es als kurvenäußeres Segment um ein Riemenrad umgelenkt wird. Für den zweiten Teilriemen kann ein Material gewählt werden, das besonders geeignet für die Übertragung der Zugkräfte von dem Treibrad auf die Zugträger ist. Insbesondere ist hier ein Material zu bevorzugen, dass eine ausreichende Adhesion gegenüber den Zugträgern aufbaut, eine gewünschte Traktionsfähigkeit mit einem Treibrad aufweist und gleichzeitig die bei der Kraftübertragung auftretenden Spannungen und Verformungen toleriert. Als besonders günstig haben sich dabei Elastomere mit einer Härte von 70 bis 100 Shore (A), bevorzugt 75 bis 95 Shore (A) und besonders bevorzugt eine Härte von 80 bis 85 Shore (A) erwiesen.

Vorteilhafterweise wird der zweite Teilriemen mit dem ersten Teilriemen mittels Extrusion und/oder Kleben verbunden. Sofern der zweite Teilriemen auf den ersten aufextrudiert wird, ergibt sich ein besonders einfacher Herstellungsprozess. Gleichzeitig verbinden sich erster und zweiter Teilriemen fest und dauerhaft. Vorteilhaft umschließt der zweite Teilriemen bei der Extrusion die Zugträger über den gesamten Bereich ihrer Umfangsflächen, der sich nicht in den Rillen des ersten Teilriemens abstützt, was die Verbindung zwischen erstem und zweitem Teilriemen und Zugträgern verstärkt.

Gleichermaßen kann der zweite Teilriemen auch als Halbzeug vorgefertigt und auf den ersten Teilriemen aufgeklebt werden. Dabei weist der vorgefertigte zweite Teilriemen vorteilhafterweise Aussparungen auf, die zu den in den Rillen angeordneten Zugträgern im Wesentlichen komplementär sind. Bevorzugt können diese Aussparungen etwas kleiner als die Zugträger sein, so dass die Zugträger beim Zusammenfügen der beiden Teilriemen zwischen diesen unter Verformung des zweiten Teilriemens fest eingebunden werden.

In einer bevorzugten Ausführung der vorliegenden Erfindung wird auf der dem zweiten Teilriemen abgewandten Seite des ersten Teilriemens ein dritter Teilriemen angeordnet, der vorteilhaft aus einem thermoplastischen Kunststoff wie beispielsweise Polyamid (PA), Polypropylen (PP), Polyethylen (PE), Polycarbonat (PC) oder Polyvinylchlorid (PVC) hergestellt ist. Auch bei diesem thermoplastischen Kunststoff kann es sich um ein Polyblend, i.e. eine Mischung aus zwei oder mehr verschiedenen Kunststoffen handeln. Gleichermaßen kann der dritte Teilriemen auch ein Gewebe aus einem dieser thermoplastischen Kunststoffe umfassen.

Ein solcher dreiteiliger Aufbau ermöglicht es, für die jeweilige Funktion der einzelnen Teilriemen jeweils andere, optimal geeignete Materialien zu verwenden. So kann das Material des ersten, dann als Zwischenschicht fungierenden, Teilriemens auf die Führung der Zugträger, i.e. die stabile und leichte Herstellbarkeit geeigneter Rillen optimiert sein, das Material des zweiten Teilriemens mit Blick auf die Übertragung der Zugkräfte von einem Treibrad auf die Zugträger, und/oder der dritte Teilriemen kann auf eine möglichst gute Umlenkbarkeit, also insbesondere einen niedrigen Reibwert, eine hohe Flexibilität und/oder eine hohe Abriebfestigkeit ausgelegt sein.

Vorteilhafterweise kann die dem ersten Teilriemen abgewandte Seite des zweiten Teilriemens eine Traktionsfläche zum Zusammenwirken mit einem Treibrad der Aufzuganlage bilden. Hierzu kann diese Traktionsfläche eine Beschichtung und/oder eine oder mehrere Keilrippen zum Zusammenwirken mit korrespondierenden Rillen des Treibrades der Aufzuganlage aufweisen.

Mittels einer solchen Beschichtung kann einerseits ein definierter Reibwert, der sich vom Reibwert des Materials des zweiten Teilriemens unterscheiden kann, für den Kraftschluss mit dem Treibrad zur Verfügung gestellt werden. Gleichermaßen können andere Oberflächeneigenschaften, beispielsweise die Abriebfestigkeit beeinflusst werden. So kann ein insgesamt eher weicher und insofern gut umlenkbarer zweiter Teilriemen mit einer dünnen harten Beschichtung versehen werden, die abriebfest ist.

Zur Erhöhung des Anpressdruckes an ein Treibrad und damit der Traktions- bzw. Treibfähigkeit bei gleicher Radialkraft und damit gleicher Lagerbelastung und Riemenspannung kann die Traktionsfläche mit Keilrippen versehen sein. Gleichzeitig führen solche Keilrippen den Riemen vorteilhaft in Querrichtung auf einem Treibrad. Bevorzugt weisen die Rippen einen keilförmigen Querschnitt mit einem Flankenwinkel von 60° bis 120° auf, wobei der Bereich von 80° bis 100° zu bevorzugen ist. Als Flankenwinkel ist der zwischen beiden Seitenflächen (Flanken) einer keilförmigen Rippe vorhandene Winkel bezeichnet. Dieser Bereich hat sich als idealer Kompromiss zwischen einer hohen Traktionsfähigkeit und der Gefahr eines Verklemmens des Riemens in der Treibrad herausgestellt.

Die der Traktionsfläche abgewandte Seite des Riemens, also beispielsweise eine Oberfläche des ersten oder - falls vorhanden - dritten Teilriemens kann eine Gleitfläche zum Zusammenwirken mit einem Umlenkelement der Aufzuganlage bilden. Durch entsprechende Materialwahl und/oder eine Beschichtung der Gleitfläche kann die Belastung bei der Umlenkung vermindert werden. Insbesondere kann die Abriebfestigkeit und/oder der Reibwert der Gleitfläche gezielt eingestellt werden. So weist die Gleitfläche eines ersten oder dritten Teilriemens aus Polyamid, Polyethylen und/oder Polyester in einer bevorzugten Ausführung einen Reibwert von höchstens 0,35, bevorzugt von höchstens 0,3 und besonders bevorzugt einen Reibwert kleiner oder gleich 0,25 auf.

Ein nach einem erfindungsgemäßen Verfahren hergestellter Riemen für eine Aufzuganlage umfasst einen ersten Teilriemen, der eine Anordnung von Rillen, insbesondere in Längsrichtung des Riemens, aufweist, einen Zugträger in wenigstens einer Rille der Rillenanordnung und einen zweiten Teilriemen, der mit dem ersten Teilriemen derart verbunden ist, dass der Zugträger im Inneren des Riemens aufgenommen ist.

Ein solcher Riemen ist einfach herzustellen, wobei die lagerichtige Anordnung der Zugträger innerhalb des Riemens vorteilhaft durch die Rillen bewirkt wird. Sind die Materialien des ersten und zweiten bzw. eines gegebenenfalls vorhandenen dritten Teilriemens unterschiedlich, so können bei einem solchen Riemen beispielsweise die Reibwerte, die Abriebfestigkeit, die Schlagzähigkeit und/oder ähnliche Eigenschaften der einzelnen Teilriemen und einer von diesen gebildeten Traktions- und/oder Gleitfläche vorgegeben werden. So kann beispielsweise für den ersten bzw. dritten Teilriemen ein Material wie beispielsweise Polyamid, Polyester oder Polyethylen mit niedrigem Reibwert von vorzugsweise höchstens 0,3 gewählt werden. Ein solcher Riemen, der mit seiner vom ersten bzw. dritten Teilriemen gebildeten Gleitfläche Umlenkelemente wie beispielsweise Umlenkrollen teilweise oder mehrfach umschlingt, erzeugt bei seiner Umlenkung nur geringe Reibkräfte, was insbesondere bewirkt, dass die seitliche Führung des Riemens auf einer Umlenkrolle weniger Probleme verursacht, und dass die für die Aufzuganlage erforderliche Antriebsleistung reduziert wird.

Wenn vorteilhafterweise nicht nur die Traktionsfläche, sondern auch die Gleitfläche eine oder mehrere Rippen aufweist, kann der Riemen auch bei Umlenkungen um Riemenräder, bei denen der Riemen das Riemenrad mit seiner Gleitfläche berührt, in Querrichtung geführt werden, was ein seitliches Herablaufen des Riemens von solchen Riemenrädern verhindert.

Die Teilriemen können verschiedene Farben aufweisen, um ein korrektes Auflegen des Riemens zu gewährleisten. Hierzu können beispielsweise Traktions- und Gleitfläche unterschiedlich eingefärbt oder beschichtet sein. Gleichermaßen können die Teilriemen aus Materialien unterschiedlicher Farbe bestehen.

Weitere Aufgaben, Merkmale und Vorteile ergeben sich aus den Unteransprüchen und den nachfolgend beschriebenen Ausführungsbeispiele. Hierzu zeigt:
- Fig. 1: einen Querschnitt durch einen Riemen nach einer Ausführung der vorliegenden Erfindung;
- Fig. 2: einen Querschnitt durch den ersten Teilriemen aus Fig. 1 vor der Anordnung der Zugträger; und
- Fig. 3: einen zu einer Aufzugskabinenfront parallelen Schnitt durch eine Aufzugsanlage mit einem Riemen nach einer Ausführung der vorliegenden Erfindung.

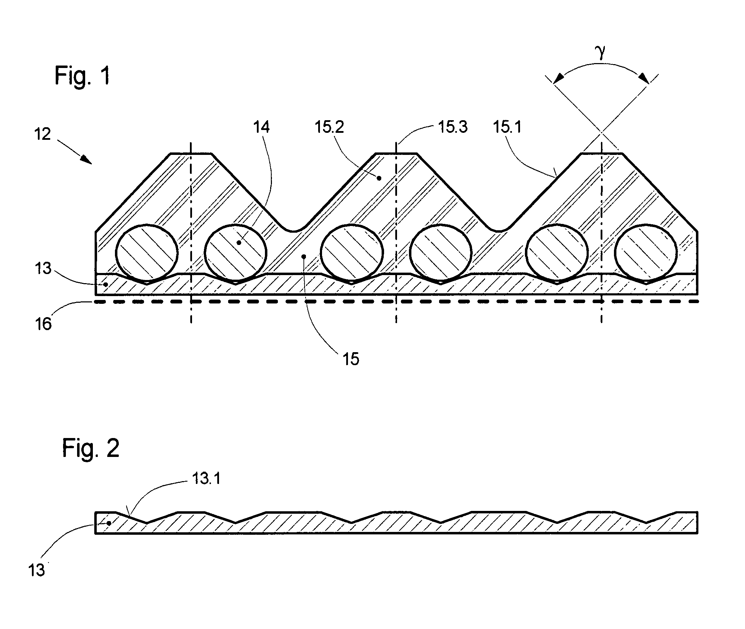

Fig. 2 zeigt einen ersten Teilriemen 13 aus Polyamid. Dieser weist V-förmige Rillen 13.1 auf. Ein solcher Riemen kann beispielsweise mittels Extrusion hergestellt werden, wobei die Rillen 13.1 vorteilhaft bereits beim Urformprozess ausgebildet werden. Um die Biegebelastung des ersten Teilriemens beim Umlaufen von Riemenrädern so gering wie möglich zu halten, weist dieser eine Dicke von höchstens 2 mm oder von höchstens einem Drittel der gesamten Riemendicke auf.

Zur Herstellung eines Riemen 12 nach einer Ausführung der vorliegenden Erfindung wird zunächst in den Rillen 13.1 des in Fig. 2 dargestellten ersten Teilriemens 13 je ein Zugträger 14 angeordnet. Der Zugträger ist in nicht näher dargestellter Weise als Cord aus einem Drahtseil oder aus Drahtlitzen ausgebildet, die ihrerseits aus einzelnen miteinander verseilten Einzeldrähten aus Stahl aufgebaut sind.

Sofern mit demselben ersten Teilriemen als Plattform verschiedene Riemen mit unterschiedlichen Zugfestigkeiten hergestellt werden sollen, ist es nicht notwendig, in jeder Rille einen Zugträger anzuordnen. So kann beispielsweise jede zweite Rille freigelassen werden, was mit dem gleichen ersten Teilriemen einen Aufzugriemen mit im Wesentlichen der halben Zugfestigkeit, aber höherer Flexibilität ergibt. Die Verwendbarkeit gleicher erster Teilriemen für unterschiedliche Aufzugriemen verringert vorteilhaft die Kosten für Werkzeuge, Lagerhaltung etc.

Die Zugträger 14 werden mit einer leichten Vorspannung von oben in die V-förmigen Rillen 13.1 gepresst, wodurch diese sich elastisch verformen und im Wesentlichen die Kontur der Zugträger annehmen. In einem nachfolgenden, nicht näher erläuterten Teilschritt des Herstellungsverfahrens kann der erste Teilriemen auch soweit erwärmt werden, dass der thermoplastische Kunststoff wieder soweit plastifiziert wird, dass sich die Rillen den Zugträgern unter plastischer Verformung anpassen. Gleichermaßen können in einer anderen Ausführung eines erfindungsgemäßen Herstellungsverfahrens die Zugträger im Wesentlichen spannungsfrei in die Rillen 13.1 eingelegt werden und werden durch diese lagerichtig zueinander angeordnet. Unter Einlegen ist jedwede Art der Zuführung der Zugträger zu verstehen.

Anschließend wird der zweite Teilriemen 15 aus Polyurethan auf den ersten Teilriemen 13 mit in dessen Rillen 13.1 angeordneten Zugträgern 14 aufextrudiert. Dabei umschließt der zweite Teilriemen die noch freie Oberfläche der Zugträger und verbindet sich gleichzeitig thermisch mit dem ersten Teilriemen 13 an dessen dem zweiten Teilriemen zugewandter, nicht von Zugträgern bedeckter Oberfläche. Die Adhäsion zwischen dem zweiten Teilriemen 15 und den darin teilweise eingebetteten Zugträgern 14 ist groß genug, um die in der Aufzuganlage auftretenden Zugkräfte von einem Treibrad über den zweiten Teilriemen auf die Zugträger zu übertragen.

Fig. 1 zeigt den resultierenden Riemen 12 im Querschnitt. Der zweite Teilriemen 15 weist auf seiner dem ersten Teilriemen 13 abgewandten Seite Keilrippen 15.2 mit einem Flankenwinkel y von 90° auf. Diese können gleichermaßen durch spanende Bearbeitung des zweiten Teilriemens oder, bevorzugt, beim Urformen des zweiten Teilriemens ausgebildet werden, indem beispielsweise das Polyurethan zwischen den ersten Teilriemen 13 und ein von diesem in Höhe des zweiten Teilriemens beabstandetes Formband der Extrudieranlage (nicht dargestellt) eingebracht wird, das ein entsprechend komplementäres Keilrippenprofil aufweist.

Üblicherweise enthält der Riemen mehrere Zugträger 14, und der erste Teilriemen 13 weist mehrere die Zugträger führende Rillen 13.1 auf, wobei die Abstände zwischen benachbarten Rillen bzw. Zugträgern so ausgeführt sind, dass jeder der Keilrippen 15.2 gleich viele Zugträger 14 zugeordnet werden können und die jeweilige Gruppe der einer Keilrippe 15.2 zugeordneten Zugträger symmetrisch zur Mittelachse 15.3 dieser Keilrippe angeordnet sind.

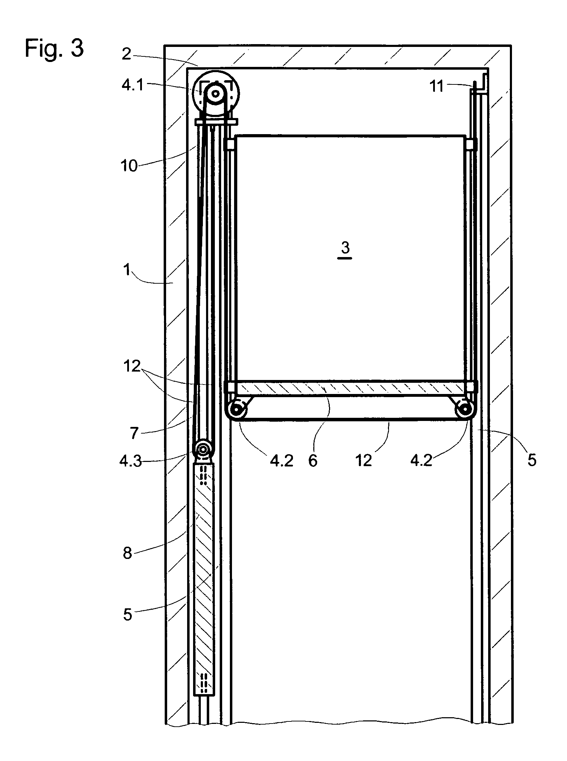

Der erste Teilriemen 13 bildet an seiner dem zweiten Teilriemen 15 abgewandten Seite (in Fig. 1 unten) eine Gleitfläche aus, die zur Umlenkung um ein Umlenkelement 4.2 (s. Fig. 3) vorgesehen ist. Diese Gleitfläche aus Polyamid weist einen geringen Reibwert und gleichzeitig eine hohe Abriebfestigkeit auf. Vorteilhaft verringert sich damit die Reibkraft, die zum Führen des Riemens auf einer Umlenkrolle zu überwinden ist, somit die seitliche Belastung des Riemens, beispielsweise durch Führungsbordscheiben von Umlenkrollen und in der Folge auch die erforderliche Antriebsleistung. Gleichzeitig verlängert sich die Lebensdauer des Riemens und des Umlenkelements.

Der zweite Teilriemen 15 bildet an seiner dem ersten Teilriemen 13 abgewandten Seite (in Fig. 1 oben) eine mit den Keilrippen 15.2 versehene Traktionsfläche aus, die zum Zusammenwirken mit einem Treibrad 4.1 (s. Fig. 3) vorgesehen ist. Sofern ein anderer Reibwert als der durch das Polyurethan des zweiten Teilriemens 15 gegebene erwünscht ist, kann der Riemen auf seiner Traktionsfläche eine Beschichtung (nicht dargestellt) aufweisen. Beispielsweise können die in Kontakt mit einem korrespondierenden Keilrippenprofil des Treibrades kommenden Flanken der Keilrippen 15.2 mit einer dünnen Polyamidfolie beschichtet sein. Zur Vereinfachung der Herstellung kann gleichermaßen auch die gesamte Traktionsfläche mit einer solchen Folie beschichtet sein.

In einer weiteren Ausführung der vorliegenden Erfindung umfasst der Riemen 12 einen dritten Teilriemen 16 aus Polyethylen, der auf der dem zweiten Teilriemen 15 abgewandten Seite des ersten Teilriemens 13 angeordnet ist. In Fig. 1 ist diese weitere Ausführung bzw. der dritte Teilriemen 16, der sie von der vorher beschriebenen Ausführung unterscheidet, gestrichelt angedeutet.

Fig. 3 zeigt schematisch einen Schnitt durch ein in einem Aufzugsschacht 1 installiertes Aufzugssystem nach einer Ausführung der vorliegenden Erfindung. Das Aufzugssystem umfasst einen in einem Aufzugsschacht 1 fixierten Antrieb 2 mit einem Treibrad 4.1, eine an Kabinenführungsschienen 5 geführte Aufzugskabine 3 mit unterhalb des Kabinenbodens 6 angebrachten Umlenkrollen in Form von Kabinentragrollen 4.2, ein an Gegengewichtsführungsschienen 7 geführtes Gegengewicht 8 mit einer weiteren Umlenkrolle in Form einer Gegengewichtstragrolle 4.3, und den Riemen 12 für die Aufzugskabine 3 und das Gegengewicht 8, der die Antriebskraft von dem Treibrad 4.1 der Antriebseinheit 2 auf die Aufzugskabine und das Gegengewicht überträgt.

Der Riemen 12 ist an einem seiner Enden unterhalb des Treibrades 4.1 an einem ersten Riemenfixpunkt 10 befestigt. Von diesem aus erstreckt er sich abwärts bis zu der Gegengewichtstragrolle 4.3, umschlingt diese und erstreckt sich von dieser aus zum Treibrad 4.1, umschlingt diese und verläuft entlang der gegengewichtsseitigen Kabinenwand abwärts, umschlingt auf beiden Seiten der Aufzugskabine je eine unterhalb der Aufzugskabine 3 angebrachte Kabinentragrolle 4.2 um je 90° und verläuft entlang der dem Gegengewicht 8 abgewandten Kabinenwand aufwärts zu einem zweiten Riemenfixpunkt 11.

Die Ebene des Treibrades 4.1 kann rechtwinklig zur gegengewichtsseitigen Kabinenwand angeordnet sein und ihre Vertikalprojektion kann außerhalb der Vertikalprojektion der Aufzugskabine 3 liegen. Es ist daher zu bevorzugen, dass das Treibrad 4.1 einen geringen Durchmesser aufweist, damit der Abstand zwischen der linksseitigen Kabinenwand und der dieser gegenüber liegenden Wand des Aufzugsschachts 1 möglichst klein sein kann. Außerdem ermöglicht ein geringer Treibraddurchmesser die Verwendung eines getriebelosen Antriebsmotors mit relativ geringem Antriebsdrehmoment als Antriebseinheit 2.

Das Treibrad 4.1 und die Gegengewichtstragrolle 4.3 sind an ihrer Peripherie mit Rillen versehen, die mit den Rippen 15.2 des Riemens 12 korrespondieren. Wo der Riemen 12 eines der Riemenräder 4.1 oder 4.3 umschlingt, liegen die auf seiner Traktionsfläche angeordneten Rippen in korrespondierenden Rillen des Riemenrades, wodurch eine ausgezeichnete Führung des Riemens auf diesen Riemenrädern gewährleistet ist. Außerdem kann durch eine zwischen den Rillen des als Treibrad dienenden Riemenrades 4.1 und den Rippen des Riemens 12 entstehende Keilwirkung die Traktionsfähigkeit verbessert werden.

In einer nicht dargestellten weiteren Ausführung weisen auch die Gleitfläche des Riemens 12 und die Kabinentragrollen 4.2 korrespondierende Keilrippen auf. Bei der Umschlingung der Kabinentragrollen 4.2 unterhalb der Aufzugskabine 3 ist daher im Gegensatz zu herkömmlichen Aufzuganlagen auch eine seitliche Führung zwischen den Kabinentragrollen 4.2 und dem Riemen 12 gegeben, da der Riemen auch Rippen auf seiner den Kabinentragrollen 4.2 zugewandten Seite aufweist.

## Patentansprüche

1. Verfahren zur Herstellung eines Riemens (12) für eine Aufzuganlage mit den Schritten:
Herstellen eines ersten Teilriemens (13), der eine Anordnung von sich in Längsrichtung des Riemens erstreckenden Rillen (13.1) aufweist;
Anordnen von einem Zugträger (14) in wenigstens einer Rille (13.1); und
Verbinden eines zweiten Teilriemens (15) mit dem ersten Teilriemen (13) derart, dass der Zugträger (14) im Inneren des Riemens (12) aufgenommen ist, wobei der zweite Teilriemen (15) eine Härte von 70 bis 100 Shore (A), bevorzugt 75 bis 95 Shore (A) und besonders bevorzugt eine Härte von 80 bis 85 Shore (A) aufweist, und wobei die dem ersten Teilriemen (13) abgewandte Seite des zweiten Teilriemens (15) eine Traktionsfläche (15.1) zum Zusammenwirken mit einem Treibrad (4.1) der Aufzuganlage bildet.

2. Verfahren nach Anspruch 1, wobei der erste Teilriemen (13) aus einem thermoplastischen Kunststoff hergestellt wird.

3. Verfahren nach Anspruch 1 oder 2, wobei der erste Teilriemen (13) insbesondere aus Polyamid (PA), Polypropylen (PP), Polyethylen (PE), Polycarbonat (PC) oder Polyvinylchlorid (PVC) oder Polyblend und/oder aus einem Gewebe aus einem solchen thermoplastischen Kunststoff hergestellt wird.

4. Verfahren nach einem der vorhergehenden Ansprüche, wobei die Rillen (13.1) durch thermische und/oder mechanische Verformung des ersten Teilriemens (13) ausgebildet werden.

5. Verfahren nach einem der vorhergehenden Ansprüche, wobei der Zugträger (14) als Litze oder Seil aus einzelnen Stahldrähten und/oder Kunststofffasern hergestellt werden.

6. Verfahren nach einem der vorhergehenden Ansprüche, wobei der zweite Teilriemen (15) aus einem Elastomer hergestellt wird, und wobei das Elastomer bevorzugt aus Polyurethan (PU), Polychloropren (CR) oder Ethylen-Propylen-Dien-Kautschuk (EPDM), hergestellt wird.

7. Verfahren nach einem der vorhergehenden Ansprüche, wobei der zweite Teilriemen (15) mit dem ersten Teilriemen mittels Extrusion und/oder Kleben verbunden wird.

8. Verfahren nach einem der vorhergehenden Ansprüche, wobei auf der dem zweiten Teilriemen (15) abgewandten Seite des ersten Teilriemens ein dritter Teilriemen (16), insbesondere aus einem thermoplastischen Kunststoff, insbesondere Polyamid (PA), Polypropylen (PP), Polyethylen (PE), Polycarbonat (PC) oder Polyvinylchlorid (PVC) oder Polyblend und/oder einem Gewebe aus einem solchen thermoplastischem Kunststoff angeordnet wird.

9. Verfahren nach einem der vorhergehenden Ansprüche, wobei die Traktionsfläche (15.1) eine oder mehrere Keilrippen (15.2) zum Zusammenwirken mit korrespondierenden Rillen des Treibrades (4.1) der Aufzuganlage aufweist.

10. Verfahren nach Anspruch 9, wobei der Riemen mehrere Zugträger (14) und der erste Teilriemen (13) mehrere die Zugträger (14) führende Rillen (13.1) umfasst und die Abstände zwischen benachbarten Rillen (13.1) bzw. Zugträgern (14) so ausgeführt werden, dass jeder der Keilrippen (15.2) gleich viele Zugträger (14) zugeordnet werden können, und die jeweilige Gruppe der einer Keilrippe (15.2) zugeordneten Zugträger (14) symmetrisch zur Mittelachse (15.3) dieser Keilrippe (15.2) angeordnet sind.

11. Verfahren nach einem der vorhergehenden Ansprüche, wobei die Traktionsfläche (15.1) eine Beschichtung aufweist.

12. Verfahren nach einem der vorhergehenden Ansprüche, wobei die der Traktionsfläche abgewandte Seite des Riemens (12) eine Gleitfläche zum Zusammenwirken mit einer Umlenkrolle (4.2) der Aufzuganlage bildet.

13. Riemen (12) für eine Aufzuganlage, der nach einem Verfahren nach einem der vorhergehenden Ansprüche hergestellt ist und folgende Komponenten aufweist:
einen ersten Teilriemen (13), der eine Anordnung von Rillen (13.1), insbesondere in Längsrichtung des Riemens, aufweist;
einen Zugträger (14) in wenigstens einer Rille der Rillenanordnung; und
einen zweiten Teilriemens (15), der mit dem ersten Teilriemen (13) derart verbunden ist, dass der Zugträger (14) im Inneren des Riemens (12) aufgenommen ist, wobei der zweite Teilriemen (15) eine Härte von 70 bis 100 Shore (A), bevorzugt 75 bis 95 Shore (A) und besonders bevorzugt eine Härte von 80 bis 85 Shore (A) aufweist, und wobei die dem ersten Teilriemen (13) abgewandte Seite des zweiten Teilriemens (15) eine Traktionsfläche (15.1) zum Zurammenwirken mit einem Treibrad (4.1) der Aufzugsanlage aufweist.

14. Aufzugsanlage mit einer Aufzugkabine (3), einem Antrieb (2) und einer Riemenanordnung mit wenigstens einem Riemen (12) nach Anspruch 13.

## Claims

1. Method of manufacturing a belt (12) for a lift installation, comprising the steps:
producing a first part belt (13), which has an arrangement of grooves (13.1) extending in the longitudinal direction of the belt;
arranging a tensile carrier (14) in at least one groove (13.1) and
connecting a second part belt (15) with the first part belt (13) in such a manner that the tensile carrier (14) is received in the interior of the belt (12), wherein the second part belt (15) has a hardness of 70 to 100 Shore (A), preferably 75 to 95 Shore (A) and particularly preferably a hardness of 80 to 85 Shore (A), and wherein the side of the second part belt (15) remote from the first part belt (13) forms a traction surface (15.1) for co-operation with a drive wheel (4.1) of the lift installation.

2. Method according to claim 1, wherein the first part belt (13) is produced from a thermoplastic synthetic material.

3. Method according to claim 1 or 2, wherein the first part belt (13) is produced from polyamide (PA), polypropylene (PP), polyethylene (PE), polycarbonate (PC) or polyvinylchloride (PVC) or polyblend and/or from a fabric consisting of such a thermoplastic synthetic material.

4. Method according to any one of the preceding claims, wherein the grooves (13.1) are formed by thermal and/or mechanical deformation of the first part belt (13).

5. Method according to any one of the preceding claims, wherein the tensile carrier (14) is formed as a strand or cable from individual steel wires and/or synthetic material fibres.

6. Method according to any one of the preceding claims, wherein the second part belt (15) is produced from an elastomer and wherein the elastomer is preferably produced from polyurethane (PU), polychloroprene (CR) or ethylene propylene diene rubber (EPDM).

7. Method according to any one of the preceding claims, wherein the second part belt (15) is connected with the first part belt by means of extrusion and/or glueing.

8. Method according to any one of the preceding claims, wherein a third part belt (16) particularly of a thermoplastic synthetic material, particularly polyamide (PA), polypropylene (PP), polyethylene (PE), polycarbonate (PC) or polyvinylchloride (PVC) or polyblend and/or a fabric consisting of such a thermoplastic synthetic material material, is arranged on the side of the first part belt remote from the second part belt (16).

9. Method according to any one of the preceding claims, wherein the traction surface (15.1) has one or more wedge ribs (15.2) for co-operation with corresponding grooves of the drive wheel (4.1) of the lift installation.

10. Method according to claim 9, wherein the belt comprises a plurality of tensile carriers (14) and the first part belt (13) has a plurality of grooves (13.1) guiding the tensile carriers (14) and the spacings between adjacent grooves (13.1) or tensile carriers (14) are such that the same number of tensile carriers (14) can be associated with each of the wedge ribs (15.2), and the respective group of tensile carriers (14) associated with one wedge rib (15.2) is arranged symmetrically with respect to the centre axis (15.3) of this wedge rib (15.2).

11. Method according to any one of the preceding claims, wherein the traction surface (15.1) has a coating.

12. Method according to any one of the preceding claims, wherein the side of the belt (12) remote from the traction surface forms a slide surface for co-operation with a deflecting roller (4.2) of the lift installation.

13. Belt (12) for a lift installation, which is manufactured in accordance with a method according to any one of the preceding claims and comprises the following components:
a first part belt (13) having an arrangement of grooves (13.1), particularly in the longitudinal direction of the belt;
a tensile carrier (14) in at least one groove of the groove arrangement; and
a second part belt (15) which is so connected with the first part belt (13) that the tensile carrier (14) is received in the interior of the belt (12), wherein the second part belt (15) has a hardness of 70 to 100 Shore (A), preferably 75 to 95 Shore (A) and particularly preferably a hardness of 80 to 85 Shore (A), and wherein the side of the second part belt (15) remote from the first part belt (13) has a traction surface (15.1) for co-operation with a drive wheel (4.1) of the lift installation.

14. Lift installation with a lift cage (3), a drive (2) and a belt arrangement with at least one belt (12) according to claim 13.

## Revendications

1. Procédé pour fabriquer une courroie (12) pour une installation d'ascenseur, avec les étapes qui consistent :
à fabriquer une première partie de courroie (13) qui présente un ensemble de rainures (13.1) s'étendant dans le sens longitudinal de la courroie ;
à disposer un renfort de traction (14) dans au moins une rainure (13.1) ; et
à relier une deuxième partie de courroie (15) à la première partie de courroie (13) de telle sorte que le renfort de traction (14) soit logé à l'intérieur de la courroie (12), la deuxième partie de courroie (15) présentant une dureté de 70 à 100 Shore (A), de préférence de 75 à 95 Shore (A) et plus spécialement une dureté de 80 à 85 Shore (A), et le côté de la deuxième partie de courroie (15) opposé à la première partie de courroie (13) formant une surface de traction (15.1) pour coopérer avec une poulie motrice (4.1) de l'installation d'ascenseur.

2. Procédé selon la revendication 1, étant précisé que la première partie de courroie (13) est fabriquée à partir d'une matière thermoplastique.

3. Procédé selon la revendication 1 ou 2, étant précisé que la première partie de courroie (13) est fabriquée en particulier en polyamide (PA), polypropylène (PP), polyéthylène (PE), polycarbonate (PC) ou poly(chlorure de vinyle) (PVC) ou en mélange polymère et/ou à partir d'un tissu en matière thermoplastique de ce type.

4. Procédé selon l'une des revendications précédentes, étant précisé que les rainures (13.1) sont formées par déformation thermique et/ou mécanique de la première partie de courroie (13).

5. Procédé selon l'une des revendications précédentes, étant précisé que le renfort de traction (14) est fabriqué sous la forme d'un toron ou d'un câble à partir de fils métalliques et/ou de fibres de matière plastique individuels.

6. Procédé selon l'une des revendications précédentes, étant précisé que la deuxième partie de courroie (15) est fabriquée à partir d'un élastomère et que l'élastomère est fabriqué de préférence à partir de polyuréthanne (PU), de polychloroprène (CR) ou de caoutchouc éthylène-propylène-diène (EPDM).

7. Procédé selon l'une des revendications précédentes, étant précisé que la deuxième partie de courroie (15) est reliée à la première par extrusion et/ou collage.

8. Procédé selon l'une des revendications précédentes, étant précisé qu'une troisième partie de courroie (16), composée en particulier de matière thermoplastique, en particulier de polyamide (PA), polypropylène (PP), polyéthylène (PE), polycarbonate (PC) ou poly(chlorure de vinyle) (PVC) ou d'un mélange polymère et/ou d'un tissu en matière thermoplastique de ce type, est disposée sur le côté de la première partie de courroie opposé à la deuxième partie de courroie (15).

9. Procédé selon l'une des revendications précédentes, étant précisé que la surface de traction (15.1) présente une ou plusieurs nervures cunéiformes (15.2) pour coopérer avec des rainures correspondantes de la poulie motrice (4.1) de l'installation d'ascenseur.

10. Procédé selon la revendication 9, étant précisé que la courroie comporte plusieurs renforts de traction (14), et la première partie de courroie (13) plusieurs rainures (13.1) qui guident les renforts de traction (14), et que les distances entre les rainures (13.1) ou renforts de traction (14) voisins sont calculées pour qu'un même nombre de renforts de traction (14) puisse être associé à chacune des nervures cunéiformes (15.2), et que chaque groupe de renforts de traction (14) associés à une nervure cunéiforme (15.2) est disposé symétriquement par rapport à l'axe médian (15.3) de cette nervure cunéiforme (15.2).

11. Procédé selon l'une des revendications précédentes, étant précisé que la surface de traction (15.1) présente un revêtement.

12. Procédé selon l'une des revendications précédentes, étant précisé que le côté de la courroie (12) opposé à la surface de traction forme une surface de glissement pour coopérer avec une poulie de renvoi (4.2) de l'installation d'ascenseur.

13. Courroie (12) pour une installation d'ascenseur, qui est fabriquée selon un procédé selon l'une des revendications précédentes, et qui comporte les composants suivants :
une première partie de courroie (13) qui présente un ensemble de rainures (13.1), en particulier dans le sens longitudinal de la courroie ;
un renfort de traction (14) dans au moins une rainure dudit ensemble de rainures ; et
une deuxième partie de courroie (15) qui est reliée à la première partie de courroie (13) de telle sorte que le renfort de traction (14) soit logé à l'intérieur de la courroie (12), la deuxième partie de courroie (15) présentant une dureté de 70 à 100 Shore (A), de préférence de 75 à 95 Shore (A) et plus spécialement une dureté de 80 à 85 Shore (A), et le côté de la deuxième partie de courroie (15) opposé à la première partie de courroie (13) présentant une surface de traction (15.1) pour coopérer avec une poulie motrice (4.1) de l'installation d'ascenseur.

14. Installation d'ascenseur avec une cabine d'ascenseur (3), un entraînement (2) et un dispositif formant courroie comprenant au moins une courroie (12) selon la revendication 13.
